# EUROPÄISCHE PATENTANMELDUNG

(11) **EP 0 842 845 A2**
(43) Veröffentlichungstag der Anmeldung: **20.05.1998**
(21) Anmeldenummer: 97119571.4
(22) Anmeldetag: 08.11.1997
(51) Int. Cl.: B64C 13/28

(54) **Linearbewegungen übertragende Anordnung mit Kraftbegrenzung**

(30) Priorität: 14.11.1996 DE 19647077
(71) Anmelder: ZF Luftfahrttechnik GmbH, 34379 Calden (DE)
(72) Erfinder: Halm, Christian, 30827 Garbsen (DE); Fischer, Manfred, 88677 Markdorf (DE); Hunold, Bernard, 88046 Friedrichshafen (DE)
(74) Vertreter: Zietlow, Karl-Peter

(57) **Zusammenfassung**

Eine Linearbewegungen übertragende Anordnung für die Verstellung eines Flügelelements (4) ist mit einem Eingangsteil (23) und einem Ausgangsteil (26) versehen, wobei zwischen Eingangsteil (23) und Ausgangsteil (26) eine Entkoppelung vorgesehen ist, welche oberhalb einer vorgegebenen Kraft (Auslösekraft) eine Relativbewegung zwischen Eingangsteil und Ausgangsteil ermöglicht. Eine oder mehrere vorgespannten Federn (42), welche bei der Relativbewegung Energie aufnehmen können stellen bei einer Entlastung Ein- und Ausgangsteil wieder in eine Ausgangsstellung zurück. Ein Übersetzungsmechanismus formt die Relativbewegung zwischen Eingangsteil (23) und Ausgangsteil (26) um. Die umgeformte Bewegung wirkt auf die Federn (42), womit eine dem Übersetzungsmechanismus entsprechende Kraft-Weg Kennlinie der Anordnung erzielt werden kann. Der Übersetzungsmechanismus besteht aus einer von einer Pleuelstange (46) angetriebenen Kurbelwelle (52) mit Kurvenscheiben (50A, 50B), welche auf einen durch Federn (42) vorgespannten, im Gehäuse (30) längsbeweglichen Kolben (48) wirken.

## Beschreibung

Die Erfindung betrifft eine Linearbewegungen übertragende Anordnung für die Verstellung eines Elements, insbesondere eines Flügelelements an einem Flugzeug, mit einem Eingangsteil und einem Ausgangsteil, wobei zwischen Eingangsteil und Ausgangsteil eine Entkoppelung vorgesehen ist, welche oberhalb einer vorgegebenen Kraft Auslösekraft) eine Relativbewegung zwischen Eingangsteil und Ausgangsteil ermöglicht und mit einer oder mehreren vorgespannten Federn, welche bei der Relativbewegung Energie aufnehmen können und die bei einer Entlastung Ein- und Ausgangsteil wieder in die Ausgangsstellung zurückstellen.

Anordnungen, die Zug- und/oder Druckkräfte linear übertragen, werden auf den verschiedensten Gebieten eingesetzt. Ein mögliches Einsatzgebiet sind Flügelelemente an einem Flugzeug, die z. B. bei Start oder Landung zur Vergrößerung des Auftriebs bei geringen Geschwindigkeiten ausgefahren werden. Für den Antrieb dieser Flügelelemente sind Kurbelgetriebe mit angelenkten Schubstangen im Einsatz. Diese wirken direkt oder über weitere Glieder auf die Flügelelemente. Damit wird eine Drehbewegung der Kurbel in eine Linearbewegung umgeformt. Wird nun die Bewegung eines Flügelelements z.B. durch Vereisung blockiert, so werden sehr hohe Reaktionskräfte erzeugt, die von der Flugzeugstruktur aufgenommen werden müssen. Die Flugzeugstruktur wird nach den maximal möglichen Kräften dimensioniert. Höhere mögliche Kräfte bedingen eine schwerere Struktur. Diese Kräfte sollen nun begrenzt werden, damit die Flugzeugstruktur leichter ausgelegt werden kann.

Es sind verschiedene Möglichkeiten zur Begrenzung dieser Reaktionskräfte bekannt. Aus der Praxis sind Drehmoment-Begrenzungssysteme bekannt, welche den einzelnen Kurbelgetrieben antriebsseitig vorgeschaltet sind. Pro Flügel können mehrere Kurbelgetriebe mit vorgeschaltetem Drehmoment-Begrenzungssystem und angelenkten Schubstangen vorhanden sein. Nachteilig ist, daß sich bei diesen Systemen die unterschiedlichen Wirkungsgrade und Anfahrmomente der Kurbelgetriebe auswirken. Das Auslosemoment des Drehmomentbegrenzungssystem muß mindestens so hoch sein, daß es bei einem schwergängigen Kurbelgetriebe nicht ungerechtfertigt auslöst. Daraus folgen bei einem leichtgängigen Kurbelgetriebe höhere mögliche Reaktionskräfte, wofür die Flugzeugstruktur ausgelegt sein muß.

Ein weiterer Nachteil erwächst aus der Kinematik von Kurbel und Schubstange. Je nach Auslenkung der Kurbel entstehen bei konstantem Drehmoment unterschiedliche Kräfte in der Schubstange. Bei maximaler oder minimaler Auslenkung entstehen auf diese Weise ebenfalls höhere Reaktionskräfte auf die Flugzeugstruktur.

Die DE 39 05 576 beschreibt eine Antriebseinrichtung mit variablem Drehmoment-Begrenzungssystem, die diesem aus der Kinematik rührenden Problem Rechnung trägt. Bei dieser bekannten Lösung ist die Drehmoment-Begrenzung jedoch relativ ungenau und außerdem ist diese Einrichtung relativ schwergewichtig.

Ebenfalls bekannt sind Drehmoment oder Kraft übertragende Bauteile mit Sollbruchstellen, die bei Überschreitung einer vorgegebenen Kraft zerstört werden. Nachteilig dabei ist jedoch, daß dann der Drehmomenten- bzw. Kraftfluß in der Regel vollständig unterbrochen ist und die Begrenzung nicht reversibel ist. Die Bauteile müssen nach einem Überlastfall ausgetauscht werden.

Um die Reaktionskräfte auf die Struktur ohne die Nachteile zu begrenzen, welche aus den unterschiedlichen Wirkungsgraden und Anfahrmomenten der Kurbelgetriebe sowie aus der Kinematik von Kurbel und Schubstange erwachsen, ist es vorteilhaft, die Begrenzung in einer Anordnung auszuführen, welche anstelle der Schubstange eingebaut wird.

Aus der DE 195 03 051 der Anmelderin ist bereits eine solche Anordnung für die Übertragung einer linearen Bewegung mit Kraftbegrenzung bekanntgeworden, welche anstelle der Schubstange eingebaut wird, und die oberhalb einer vorgegebenen Kraft (Auslösekraft) eine reversible Relativbewegung zwischen Eingangsteil und Ausgangsteil ermöglicht und unterhalb dieser Kraft eine Bewegung der Kurbel starr überträgt.

Aufgabe der Erfindung ist, den Stand der Technik weiterzuentwickeln.

Diese Aufgabe wird erfindungsgemäß dadurch gelöst, daß ein Übersetzungsmechanismus die Relativbewegung zwischen Eingangsteil und Ausgangsteil umformt, und die umgeformte Bewegung auf vorgespannte Federn wirkt, womit eine dem Übersetzungsmechanismus entsprechende Kraft-Weg Kennlinie der Anordnung erzielt werden kann. Die Vorspannung der Federn bewirkt, daß sich die Anordnung unterhalb einer bestimmten Kraft (Auslösekraft) wie eine starre Schubstange verhält.

Vorteilhaft ist, wenn die lineare Relativbewegung in eine Drehbewegung umgeformt wird, da sich auf diese Weise viele nachgeschaltete Übersetzungsmechanismen realisieren lassen. Beispielsweise kann dafür eine Kurbelwelle gewählt werden, die von einer darauf exzentrisch gelagerten Pleuelstange angetrieben wird. Dem anderen Ende der Pleuelstange wird die lineare Relativbewegung zwischen Eingangs- und Ausgangsteil aufgeprägt. Das an der Kurbelwelle erzeugte Drehmoment hängt ab von den Hebelverhältnissen an Kurbelwelle und Pleuelstange und ändert sich nichtlinear abhängig vom Drehwinkel der Kurbelwelle. Dieser Zusammenhang kann für den gewünschten Zusammenhang zwischen Kraft und Weg der Relativbewegung ausgenutzt werden. An dieser Stelle sind ebenso auch andere Übersetzungsmechanismen denkbar, wie beispielsweise eine Zahnstange, die auf ein oder mehrere Zahnräder wirkt.

Weitere Freiheitsgrade bezüglich des gewünschten Zusammenhangs zwischen Kraft und Weg können mit einer Kurvenscheibe vorteilhaft erzielt werden. Die Kurvenscheibe wird von der Kurbelwelle angetrieben. Eine formschlüssige, beispielsweise polygonförmige Mitnehmerverbindung zwischen Kurbelwelle und Kurvenscheibe kann dabei hohe Momente übertragen. Die Kurvenscheibe wirkt bei Ihrer Drehung direkt oder über ein längsbeweglich gelagertes Glied auf die Federn. Die Kontur der Kurvenscheibe bestimmt den Zusammenhang zwischen Drehwinkel an der Kurbelwelle und Einfederweg und beeinflußt so die Kraft-Weg Kennlinie der Anordnung.

Eine vorteilhafte Ausgestaltung des längsbeweglich gelagerten Gliedes ist ein Kolben mit einer ebenen Fläche auf welcher die Kurvenscheibe gleitet. Ebenso möglich ist beispielsweise auch eine längsbeweglich gelagerte drehbare Rolle. Für den Übersetzungsmechanismus sind auch andere Systeme naheliegend, wie z.B. ungleichförmig übersetzende Zahnräder, Koppelgetriebe mit mehreren in Wirkverbindung stehenden Hebeln, die beispielsweise das Kniehebelprinzip ausnutzen.

Die Federn können als Ringfedern ausgeführt sein. Diese bieten den Vorteil einer hohen Energiespeicherdichte bei geringem Gewicht. Ebenso sind jedoch auch andere Federformen denkbar, auch Drehfedern, wenn direkt eine Drehbewegung auf die Federn wirkt.

In der Praxis treten Fälle auf, in denen ein anzutreibendes Flügelelement nur vorübergehend blockiert, beispielsweise durch Vereisung. Nach einem oder mehreren Versuchen, bei denen jeweils die Kraftbegrenzung anspricht, ist es also vorteilhaft, wenn die Anordnung wieder in die Ausgangsstellung zurückkehrt, wobei hierzu gespeicherte Energie aus den Federn genutzt wird.

Für den Anwendungsfall als Kraftbegrenzung im Flugzeug ist eine Kraft-Weg Kennlinie vorteilhaft, die unterhalb einer bestimmten Kraft (Auslösekraft) näherungsweise senkrecht verläuft (steife Verbindung) und oberhalb der Auslösekraft waagrecht verläuft (konstante Kraft unabhängig vom Weg der Relativbewegung). Dies läßt sich durch eine entsprechende Wahl von Federvorspannung und Übersetzungsmechanismus erreichen. Dabei ist zu beachten, daß die Kraft über dem Weg nicht abfallen sollte, da es sonst zu einem ruckartigen Einfedern kommen kann.

Je nach Anforderungen bzw. Belastbarkeit der Struktur kann es vorteilhaft sein, wenn die Auslösekraft und der Kraftverlauf über der Relativbewegung bezüglich Zug und Druck symmetrisch oder asymmetrisch ist, was jeweils über die Wahl des Übersetzungsmechanismus erzielt werden kann. Sehr einfach läßt sich der Übersetzungsmechanismus durch die Form der Kurvenscheibe einstellen.

Für Wartungsarbeiten und Inspektionen ist es erforderlich, daß festgestellt werden kann, ob und wo ein Blockierfall aufgetreten ist. Hierzu ist es vorteilhaft, wenn die Relativbewegung durch Meß- oder Anzeigeglieder erfaß- und anzeigbar ist.

Die Kombination mit einer Abschaltvorrichtung für den Antrieb bietet den Vorteil, daß die Anordnung nur für eine begrenzte Relativbewegung (z. B. 10 mm) ausgelegt sein muß. Bevor diese Grenze überschritten ist, wird der Antrieb abgeschaltet und somit ein Schaden an der Flugzeugstruktur verhindert. Darüber hinaus wird durch eine Abschaltvorrichtung, die auf beide Flügelhälften wirkt, eine stark unterschiedliche Anstellung der Flügelelemente vermieden. Durch eine stark unterschiedliche Anstellung der Flügelelemente könnte eine ungewollte und sicherheitskritische Rollbewegung des Flugzeugs eingeleitet werden.

Die Anordnung bietet systembedingt gegenüber dem Stand der Technik außerdem Vorteile bezüglich Teilezahl, Gewicht und Genauigkeit der Nullage.

Im folgenden wird die Erfindung mit Bezug auf die beiliegenden Zeichnungen näher erläutert.

Es zeigen:
- Fig. 1: Teile eines Antriebs für die Verstellung eines Flügelelements in vereinfachter Darstellung, gesehen in Seitenansicht;
- Fig. 2: eine Schnittdarstellung einer erfindungsgemäßen Anordnung in einer (kräftefreien) Ausgangsstellung mit der Kurbelwellenachse senkrecht zur Zeichnungsebene;
- Fig. 3: eine Schnittdarstellung einer erfindungsgemäßen Anordnung in einer eingefahrenen Stellung mit der Kurbelwellenachse senkrecht zur Zeichnungsebene;
- Fig. 4: eine Ausführungsform einer Kurbelwelle in Schnittdarstellung;
- Fig. 5: eine Schnittdarstellung eines Teils einer erfindungsgemäßen Anordnung in der (kräftefreien) Ausgangsstellung mit der Kurbelwellenachse in der Zeichnungsebene;
- Fig. 6: eine schematische Darstellung einer mit der erfindungsgemäßen Anordnung erzielbaren Kraft-Weg Kennlinie;
- Fig. 7: eine vergrößerte Darstellung einer Anzeigevorrichtung, die einen erfolgten Blockierfall optisch anzeigt, in der Seitenansicht;
- Fig. 8: eine vergrößerte Darstellung der Anzeigevorrichtung, die einen erfolgten Blockierfall optisch anzeigt, im nicht ausgelösten Zustand in der Draufsicht und
- Fig. 9: eine vergrößerte Darstellung einer Anzeigevorrichtung, die einen erfolgten Blockierfall optisch anzeigt, im ausgelösten Zustand in der Draufsicht.

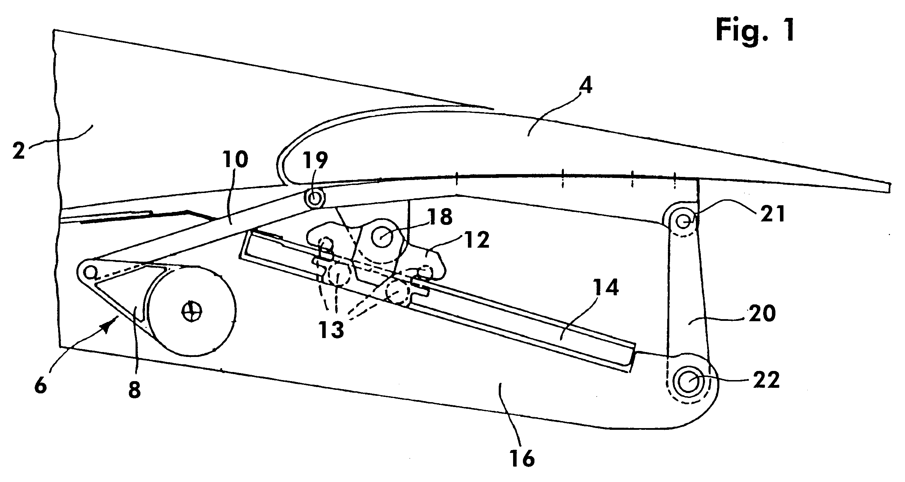

In Fig. 1 ist der hintere Bereich eines Tragflügels 2 mit dem sich hieran anschließenden Flügelelement 4 zu erkennen. Das Flügelelement 4 ist über eine Gelenkverbindung 18 mit einem Trägerwagen 12 verbunden. Der Trägerwagen 12 ist über Führungselemente 13 in einer geraden Führungsbahn 14 geführt und entlang dieser verfahrbar. Die Führungsbahn 14 ist Bestandteil eines Trägers 16, an welchem ein Kurbelgetriebe 6 mit Kurbel 8 und angelenkter Linearbewegungen übertragende Anordnung (hier als einfache Schubstange 10) sowie eine Schwinge 20 befestigt sind. Das Flügelelement 4 ist über die Gelenkverbindungen 19, 21 mit der Schubstange 10 und der Schwinge 20 verbunden.

Die Verstellung des Flügelelements 4 geschieht wie folgt:

Das Kurbelgetriebe 6 untersetzt die Drehbewegung einer nicht dargestellten Antriebswelle. Bei einer Rechtsdrehung der Kurbel 8 aus der dargestellten Ausgangslage überträgt die Schubstange 10 die Bewegung auf den Gelenkpunkt der Gelenkverbindung 19. Der Trägerwagen 12 wird dadurch auf der Führungsbahn 14 nach hinten geschoben und die Schwinge 20 dreht sich um den Drehpunkt der Gelenkverbindung 22. In der nicht dargestellten Endlage ist das Flügelelement 4 nach hinten geschoben und außerdem gegenüber dem Tragflügel 2 weiter angestellt.

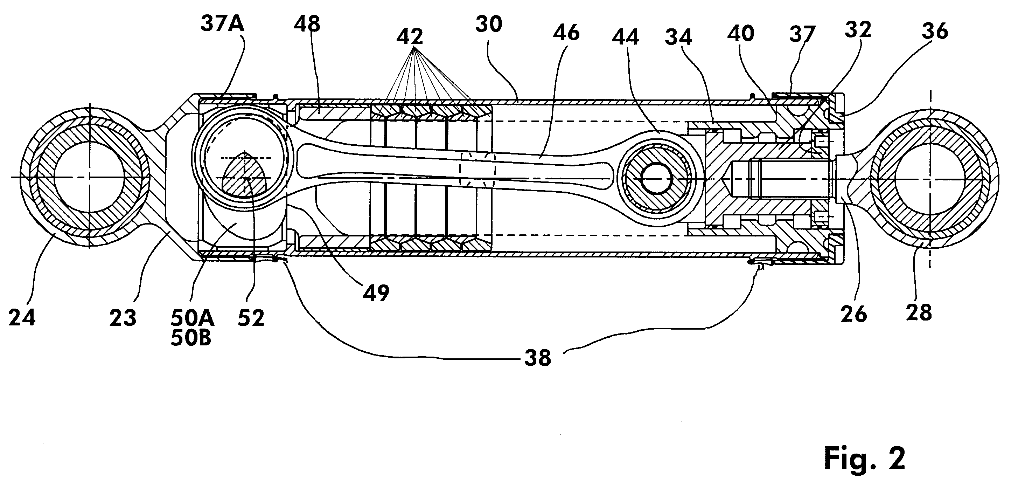

Um die Reaktionskraft auf die Flugzeugstruktur zu begrenzen, wird nun anstelle der Schubstange 10 eine, in Fig. 2 gezeigte, erfindungsgemäße Anordnung eingebaut.

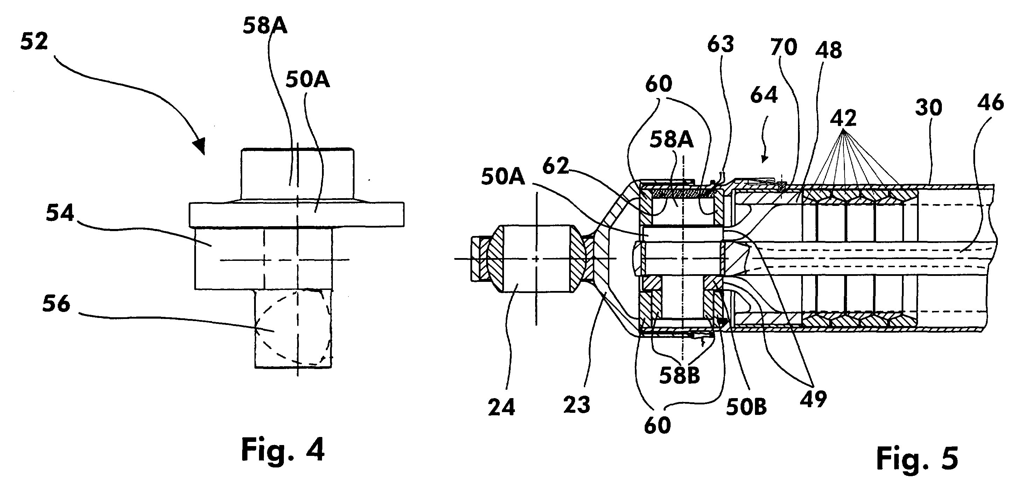

Sie weist ein Eingangsteil 23 mit Gelenkanschluß 24 und ein Ausgangsteil 26 mit Gelenkanschluß 28 auf. Zwischen Eingangsteil 23 und Ausgangsteil 26 ist ein hohlzylinderförmiges Gehäuse 30 angeordnet, welches mit dem Eingangsteil 23 mittels Schraubverbindung 37A verbunden ist. Ausgangsteilseitig ist im Gehäuse 30 ein Führungszylinder 34 angeordnet in dem ein zweiteiliger Führungskolben 32 geführt ist. Ein Deckel 36 ist mittels Schraubverbindung 37 auf dem Gehäuse 30 angebracht. Der Deckel 36 fixiert den Führungskolben 32 im Gehäuse 30. Drahtsicherungen 38 am Deckel 36 und am Eingangsteil 23 sichern die Schraubverbindungen 37, 37A mit dem Gehäuse 30. Der längsbewegliche Führungskolben 32 ist angeordnet zwischen dem Ausgangsteil 26 und einer Gelenkverbindung 44 mit einer Pleuelstange 46. Eingangsteilseitig ist die Pleuelstange 46 mit einem in Fig. 4 dargestellten exzentrischen Pleuellager 54 einer Kurbelwelle 52 verbunden, die mit einem Kurbelwellenzapfen 58A in einer in Fig. 5 erkennbaren Kurbelwellenlagerung 60 drehbar gelagert ist. Aus Montagegründen ist die Kurbelwelle 52 bezogen auf eine zur Drehachse orthogonale in Wellenrichtung mittige Schnittebene asymmetrisch ausgeführt (Fig. 4). Während die Kurvenscheibe 50A und der Kurbelwellenzapfen 58a auf der einen Seite der Schnittebene (in Fig. 4: oben) der Kurbelwelle 52 integriert sind, sind auf der anderen Seite die Kurvenscheibe 50B und der Kurbelwellenzapfen 58B jeweils als separate Bauteile auf den Polygonmitnehmer 56 im montierten Zustand aufgesteckt (Fig. 4, Fig. 5).

In der beschriebenen Ausführung ist das hohlzylinderförmige Gehäuse 30 und die Kurbelwellenlagerung fest mit dem Eingangsteil 23 verbunden. Ebenso wäre es auch möglich Eingangs- und Ausgangsteil zu vertauschen. Für die Funktion der Kraftbegrenzung ist es gleichgültig, auf welcher Seite an- bzw. abgetrieben wird.

Die Ringfedern 42, welche in den Figuren nicht auf der ganzen Länge dargestellt sind, sind zwischen der Anlagefläche 40 des Führungszylinder 34 und dem Kolben 48 eingespannt.

Der Kolben 48 ist zwischen Ringfedern 42 und Kurvenscheiben 50A, 50B im hohlzylinderförmigen Gehäuse 30 angeordnet und überträgt die Federkraft an den Anlageflächen 49 auf die Kurvenscheiben 50A, 50B.

In Fig. 5 ist erkennbar, wie die Pleuelstange 46 den Kolben 48 durchdringt und wie die Kurvenscheiben 50A, 50B beidseitig der Pleuelstange 46 in Kontakt mit den Anlageflächen des Kolbens 48 sind. An der Stirnseite des Kurbelwellenzapfens 58A ist ein Drehwinkelsensor 62 mit einem elektrischen Anschluß 63 angeordnet.

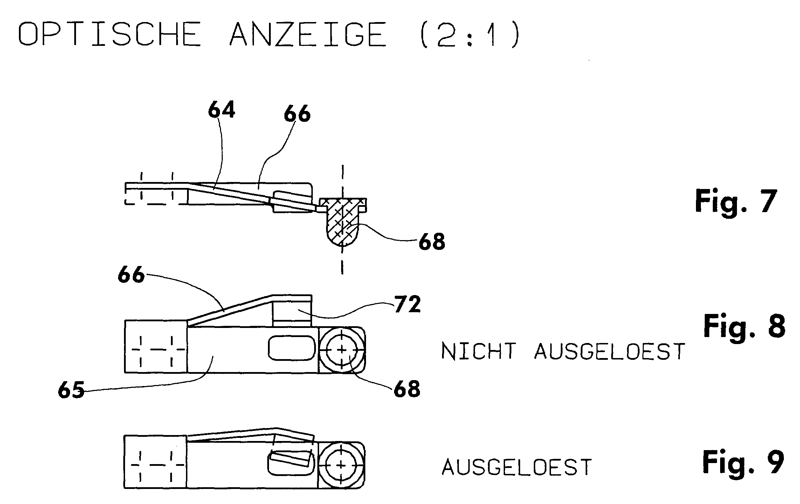

Ebenso ist in Fig. 5 eine optische Anzeigevorrichtung 64 zu erkennen, die in den Figuren 7 bis 9 vergrößert dargestellt ist. Sie besteht aus einem Anzeigestift 68, der in der Ausgangsstellung der Anordnung von einer am Gehäuse 30 befestigten Feder 65 in einer Vertiefung 70 im Kolben 48 gehalten wird. In der in den Figuren 5 und 8 dargestellten nichtausgelösten Stellung ist seitlich an die Feder 64 ein Anzeigeelement 72 von einer weiteren Feder 66 angefedert.

Die Wirkungsweise der Linearbewegungen übertragenden Anordnung mit Kraftbegrenzung ist wie folgt:

Überschreitet die Längskraft (Zug oder Druck) zwischen dem Eingangsteil 24 und dem Ausgangsteil 26 die Auslösekraft wird das Drehmoment an der Kurbelwelle 52 so groß, daß sie sich gegenüber der in Fig. 2 dargestellten Ausgangsstellung verdreht, und dabei die Kurvenscheiben 50A, 50B mitnimmt. Die Kurvenscheiben 50A, 50B sind nun so geformt, daß der Abstand zwischen Kurbelwellendrehachse und den an den Kurvenscheiben 50A, 50B anliegenden Anlageflächen 49 des Kolbens 48 bei dieser Drehung vergrößert wird, wobei der Kolben 48 entgegen der Federkraft der Ringfedern 42 bewegt wird. Bei der Drehung gleiten die Kurvenscheiben 50A, 50B unter Reibung auf den Anlageflächen 49.

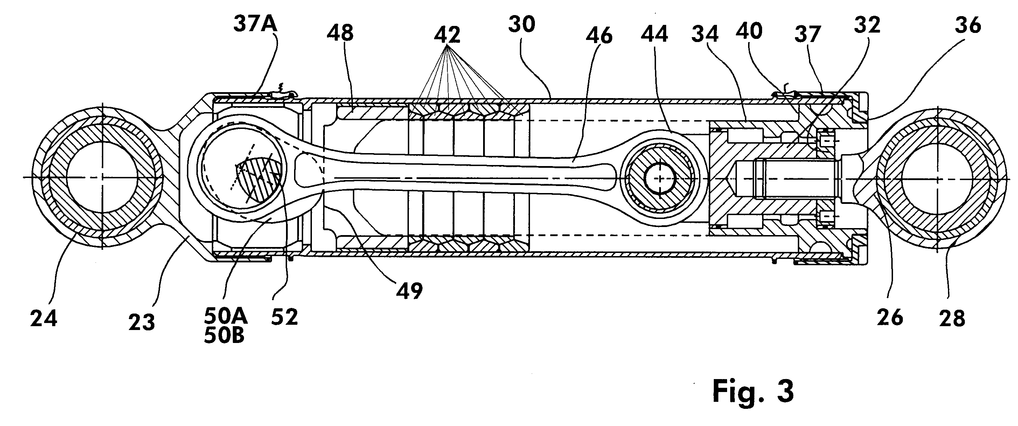

Fig. 3 zeigt die Anordnung in einer eingefahrenen Stellung. Der Abstand zwischen Eingangsteil 23 und Ausgangsteil 26 ist verkleinert. Die Kurbelwelle 52 mit den Kurvenscheiben 50A, 50B ist gegenüber der Ausgangsstellung verdreht und der Kolben 48 ist von den Kurvenscheiben 50A, 50B aus der in Fig. 2 gezeigten Ausgangsstellung ausgelenkt. Die Ringfedern 42 sind zusammengedrückt.

Die optische Anzeigevorrichtung 64 funktioniert, wie folgt beschrieben:

Tritt eine Relativbewegung zwischen dem Kolben 48 und dem Gehäuse 30 auf, wird der Anzeigestift 68 aus der Vertiefung 70 des Kolbens 48 gedrückt. Dabei wird die Feder 65 (Fig. 7) ebenfalls bewegt, so daß das Anzeigeelement 72 abrutscht und von der Feder 66 in die ausgelöste Stellung, welche in Fig. 9 dargestellt ist, gebracht wird.

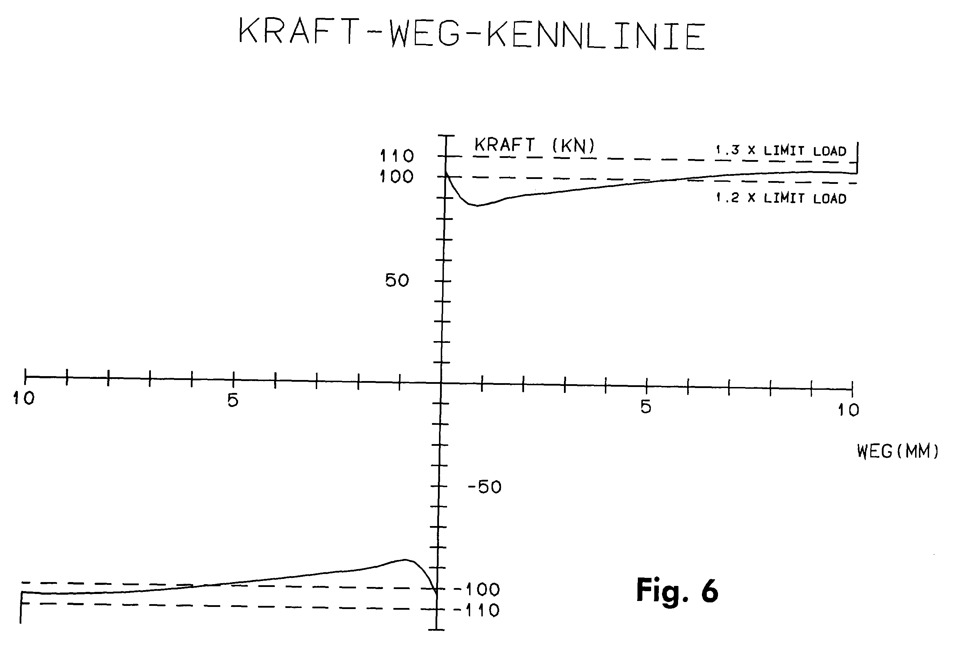

Fig. 6 zeigt eine schematische Darstellung einer mit der Anordnung erzielbaren Kraft-Weg Kennlinie. Unterhalb der Auslösekraft (hier 100 kN) tritt keine Relativbewegung auf; die Anordnung verhält sich wie eine starre Schubstange. Beim Übergang von Haftreibung zu Gleitreibung zwischen Kurvenscheiben 50A, 50B und Anlageflächen 49 nimmt die Kraft über dem Weg zunächst etwas ab, um dann flach anzusteigen. Auch beim maximalen Weg der Relativbewegung (Endstellung) bleibt Sie unterhalb einem geforderten Wert der 1,3fachen Auslösekraft. Bei den ausgeführten symmetrischen Kurvenscheiben 50A, 50B wird eine bezüglich Zug und Druck symmetrische Kraft-Weg Kennlinie erzielt, welche hier dargestellt ist.

### Bezugszeichen

- 2: Tragflügel
- 4: Flügelelement
- 6: Kurbelgetriebe
- 8: Kurbel
- 10: Schubstange
- 12: Trägerwagen
- 13: Führungselemente
- 14: Führungsbahn
- 16: Träger
- 18: Gelenkverbindung
- 19: Gelenkverbindung
- 20: Schwinge
- 21: Gelenkverbindung
- 22: Gelenkverbindung
- 23: Eingangsteil
- 24: Gelenkanschluß
- 26: Ausgangsteil
- 28: Gelenkanschluß
- 30: Gehäuse
- 32: Führungskolben
- 34: Führungszylinder
- 36: Deckel
- 37: Schraubverbindung
- 37A: Schraubverbindung
- 38: Drahtsicherung
- 40: Anlagefläche
- 42: Ringfedern
- 44: Gelenkverbindung
- 46: Pleuelstange
- 48: Kolben
- 49: Anlageflächen
- 50A: Kurvenscheibe
- 50B: Kurvenscheibe
- 52: Kurbelwelle
- 54: exzentrisches Pleuellager
- 56: Polygonmitnehmer
- 58A: Kurbelwellenzapfen
- 58B: Kurbelwellenzapfen
- 60: Kurbelwellenlagerung
- 62: Drehwinkelsensor
- 63: elektrischer Anschluß
- 64: optische Anzeigevorrichtung
- 65: Feder
- 66: Feder
- 68: Anzeigestift
- 70: Vertiefung
- 72: Anzeigeelement

## Patentansprüche

1. Linearbewegungen übertragende Anordnung für die Verstellung eines Elements, insbesondere eines Flügelelements an einem Flugzeug, mit einem Eingangsteil (23) und einem Ausgangsteil (26), wobei zwischen Eingangsteil (23) und Ausgangsteil (26) eine Entkoppelung vorgesehen ist, welche oberhalb einer vorgegebenen Kraft (Auslösekraft) eine Relativbewegung zwischen Eingangsteil (23) und Ausgangsteil (26) ermöglicht und mit einer oder mehreren vorgespannten Federn (42), welche bei der Relativbewegung Energie aufnehmen können und die bei einer Entlastung Ein- und Ausgangsteil wieder in die Ausgangsstellung zurückstellen, dadurch **gekennzeichnet,** daß ein Übersetzungsmechanismus (46, 52, 50A, 50B, 48) vorhanden ist, der die Relativbewegung zwischen Eingangsteil (23) und Ausgangsteil (26) umformt, und die umgeformte Bewegung auf die Federn (42) wirkt, womit eine dem Übersetzungsmechanismus (46, 52, 50A, 50B, 48) entsprechende Kraft-Weg Kennlinie der Anordnung erzielt werden kann.

2. Anordnung nach Anspruch 1 dadurch **gekennzeichnet,** daß eine Kurbelwelle (52) darin gelagert ist, welche durch eine exzentrisch angreifende Pleuelstange (46) drehantreibbar ist, womit die lineare Relativbewegung zwischen Eingangsteil (23) und Ausgangsteil (26) in eine Drehbewegung umgeformt wird.

3. Anordnung nach Anspruch 2 dadurch **gekennzeichnet,** daß die Kurbelwelle (52) direkt oder über ein vorzugsweise polygonförmiges Mitnahmeglied (56) eine oder mehrere Kurvenscheiben (50A, 50B) antreibbar ist, welche über ein im Eingangsteil (23) längsbeweglich gelagertes, vorzugsweise als Kolben (48) ausgeführtes Bauteil, auf die vorgespannte(n) Feder(n) (42) wirkt, wobei über die Kontur der Kurvenscheiben (50A, 50B) Einfluß auf die Kraft-Weg Kennlinie der Anordnung ausübbar ist.

4. Anordnung nach einem der Ansprüche 1 bis 3 dadurch **gekennzeichnet,** daß die vorgespannten Federn (42) Ringfedern sind.

5. Anordnung nach einem der Ansprüche 1 bis 4 dadurch **gekennzeichnet,** daß der Übersetzungsmechanismus (46, 52, 50A, 50B, 48) und die Vorspannung der Federn (42) so ausgestaltet sind, daß die Kraft als Funktion der Relativbewegung (Kraft-Weg Kennlinie) unterhalb der vorgegebenen Kraft näherungsweise senkrecht verläuft wie bei einer starren Verbindung und im Bereich der vorgegebenen Kraft näherungsweise waagerecht verläuft (konstante Kraft) und in einer Endstellung das 1,3fache der Auslösekraft nicht überschreitet.

6. Anordnung nach einem der Ansprüche 1 bis 5 dadurch **gekennzeichnet,** daß der Übersetzungsmechanismus (46, 52, 50A, 50B, 48) und die Vorspannung der Federn (42) so gewählt sind, daß die Kraft als Funktion der Relativbewegung (Kraft-Weg Kennlinie) bezüglich Zug und Druck symmetrisch sind.

7. Anordnung nach einem der Ansprüche 1 bis 5 dadurch **gekennzeichnet,** daß der Übersetzungsmechanismus (46, 52, 50A, 50B, 48) und die Vorspannung der Federn (42) so gewählt sind, daß die Kraft als Funktion der Relativbewegung (Kraft-Weg Kennlinie) bezüglich Zug und Druck asymmetrisch sind.

8. Anordnung nach einem der Ansprüche 1 bis 7, dadurch **gekennzeichnet,** daß eine erfolgte Relativbewegung zwischen Eingangsteil (23) und Ausgangsteil (26) durch eine optische Anzeigevorrichtung (64) anzeigbar ist.

9. Anordnung nach einem der Ansprüche 1 bis 8, dadurch **gekennzeichnet,** daß die Relativbewegung zwischen Eingangsteil (23) und Ausgangsteil (26) durch Meßglieder (62, 63) erfaßbar ist.

10. Anordnung nach Anspruch 9, dadurch **gekennzeichnet,** daß eine Abschaltvorrichtung für einen Antrieb vorgesehen ist, welche nach einem bestimmten Weg der Relativbewegung den Antrieb abschaltet.
